# EUROPEAN PATENT SPECIFICATION

(11) **EP 0 921 035 B1**
(45) Date of publication and mention of the grant of the patent: **12.09.2007**
(21) Application number: 98119862.5
(22) Date of filing: 20.10.1998
(51) Int. Cl.: B60Q 1/076

(54) **Automatic optical axis adjuster for automotive headlamp**
Automatische Einstellung der optischen Achse eines Kfz-Scheinwerfers
Ajustement automatique de l'axe optique d'un phare de véhicule automobile

(30) Priority: 23.10.1997 JP 29108197
(43) Date of publication of application: 09.06.1999
(73) Proprietor: ICHIKOH INDUSTRIES, LTD., Tokyo 141-0022 (JP)
(72) Inventor: Furuya, Takayuki, c/o Ichikoh Industries, Ltd, Kanagawa 259-1192 (JP)
(74) Representative: Grünecker, Kinkeldey, Stockmair & Schwanhäusser Anwaltssozietät

(56) References cited:
- US-A- 5 673 991

## Description

### BACKGROUND OF THE INVENTION

### a) Field of the Invention

The present invention relates to an automatic optical axis adjuster for a headlamp or fog lamp, for example, provided on a car, in which a stepping motor is used to automatically adjust the optical axis of a light reflecting or emitting member of the automotive headlamp, for example, a movable reflector, vertically correspondingly to an angle of longitudinal inclination of the car body (will be referred to as "car body inclination angle" hereinunder), and more particularly, to an automatic optical axis adjuster for an automotive headlamp, in which the initial position of a stepping motor used in the automatic optical axis adjuster can be mechanically determined and the headlamp optical axis can be manually adjusted (this operation will be referred to as "initial aiming" hereinunder) with the determined initial position of the stepping motor kept unchanged.

### b) Description of the Prior Art

An automatic optical axis adjuster according to the preamble of claim 1 is known from US 5,673,991.

Generally, an automotive headlamp comprises a member which reflects a light from a lamp bulb forward and of which the optical axis is to be adjusted, a supporting member on which the light reflecting member is installed tiltably vertically about the horizontal axis thereof, and an automatic optical axis adjuster.

The automatic optical axis adjuster comprises a stepping motor provided fixedly on the supporting member, and an axially moving shaft connected threadedly to the stepping motor and joined to the light reflecting member. Therefore, as the stepping motor is driven in a direction, the moving shaft is moved correspondingly to tilt the light reflecting member. Thus, the optical axis of the light reflecting member, hence, of the headlamp, is automatically adjusted correspondingly to a car body inclination angle.

A typical conventional automatic optical axis adjuster for an automotive head lamp is known from the disclosure in the Japanese Unexamined Patent Publication No. 92207/'98, for example.

In this conventional automatic optical axis adjuster, an initial position of the stepping motor is determined and then an initial aiming is done. For the initial aiming, it is important to keep unchanged the initial position of the stepping motor.

### SUMMARY OF THE INVENTION

Accordingly, it is an object of the present invention to provide an automatic optical axis adjuster for an automotive headlamp, in which the initial position of the stepping motor can be mechanically determined and the initial aiming can be done with the determined initial position of the stepping motor kept unchanged.

The above object can be achieved by providing an automatic optical-axis adjuster, as defined in claim 1. A preferred embodiment thereof is defined in claim 2.

In the automatic optical axis adjuster according to the present invention, the moving member is moved as the moving shaft is driven axially by the stepping motor. However, the moving member is not moved as the rod is manually rotated, so that an initial aiming can be effected with the mechanically determined initial position of the stepping motor kept unchanged.

### BRIEF DESCRIPTION OF THE DRAWINGS

These objects and other objects, features, aspects and advantages of the present invention will become more apparent from the following detailed description of a preferred embodiment of the present invention when taken in conjunction with the accompanying drawings, in which:
FIG. 1 is a front view of a movable reflector-type automotive headlamp provided with one embodiment of the automatic optical axis adjuster according to the present invention;
FIG. 2 is a sectional view taken along the line II-II in FIG. 1;
FIG. 3 is a sectional view taken along the line III-III in FIG. 1;
FIG. 4 is a sectional view taken along the line IV-IV in FIG. 1;
FIG. 5 is a front view of the drive unit of the automatic optical axis adjuster;
FIG. 6 is a sectional view taken along the line VI-VI in FIG. 5; and
FIG. 7 is a sectional view taken along the line VII-VII in FIG. 5.

### DETAILED DESCRIPTION OF THE PREFERRED EMBODIMENTS

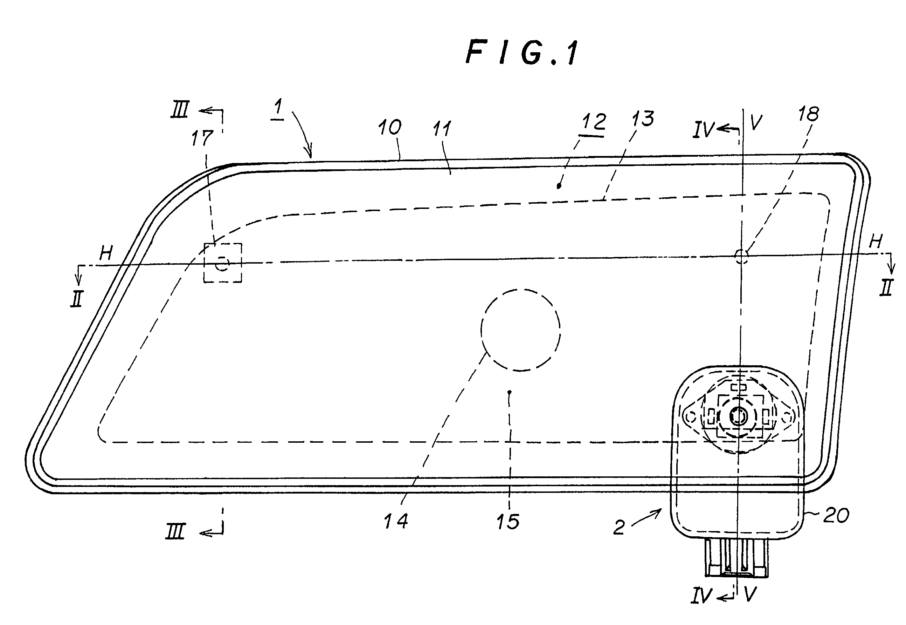

Referring now to FIGS. 1 to 4, there is illustrated an automotive headlamp 1 having a movable reflector provided with an automatic optical axis adjuster according to the present invention. As shown, the automotive headlamp 1 comprises a lamp housing 10, and a front lens 11 installed in a front opening of the lamp housing 10. The lamp housing 10 and front lens 11 define together a bulb chamber 12. A movable reflector 13 of which the optical axis is to be adjusted is disposed in the bulb chamber 12. The reflector 13 has a lamp bulb 14 removably provided thereon. The reflector 13 has provided on the inner wall thereof (facing the front lens 11) a reflecting surface 15 which reflects the light from the lamp bulb 14 forward, namely, in the direction of the front lens 11.

As shown, the reflector 13 is installed in the lamp housing 10 by means of a drive unit 2 included in the automatic optical axis adjuster, a manual optical axis adjuster 17 for horizontal adjustment of the optical axis, and an upper pivot mechanism 18 so that the reflector 13 can be turned vertically about a horizontal axis H-H (a line segment passing nearly through the center of a screw mounting 171 of the manual optical axis adjuster 17 and that of a spherical portion of the upper pivot mechanism 18) and also horizontally about a vertical axis V-V (a line segment passing nearly through the center of the spherical portion of the upper pivot mechanism 18 and that of a lower pivot mechanism 23).

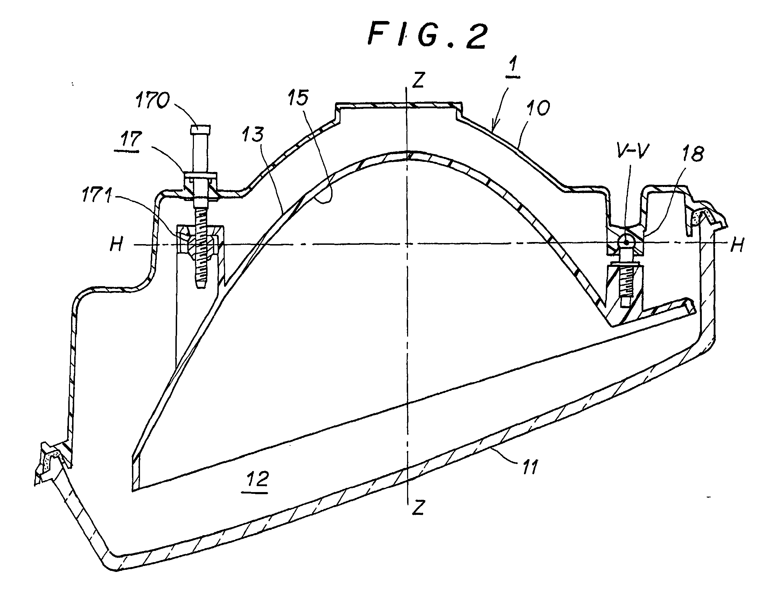

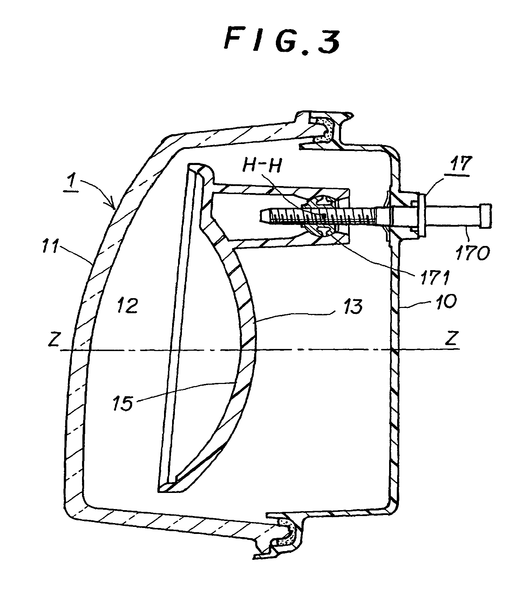

As shown in FIGS. 2 and 3, the manual optical axis adjuster 17 for horizontal adjustment of the optical axis comprises an adjusting screw 170 installed to the lamp housing 10 to be rotatable and axially immovable, and a screw mounting 171 rigidly fixed to the reflector 13 and having the adjusting screw 170 threadedly engaged therein. Thus the screw mounting 171 is movable axially of the adjusting screw 170 as the adjusting screw 170 is rotated.

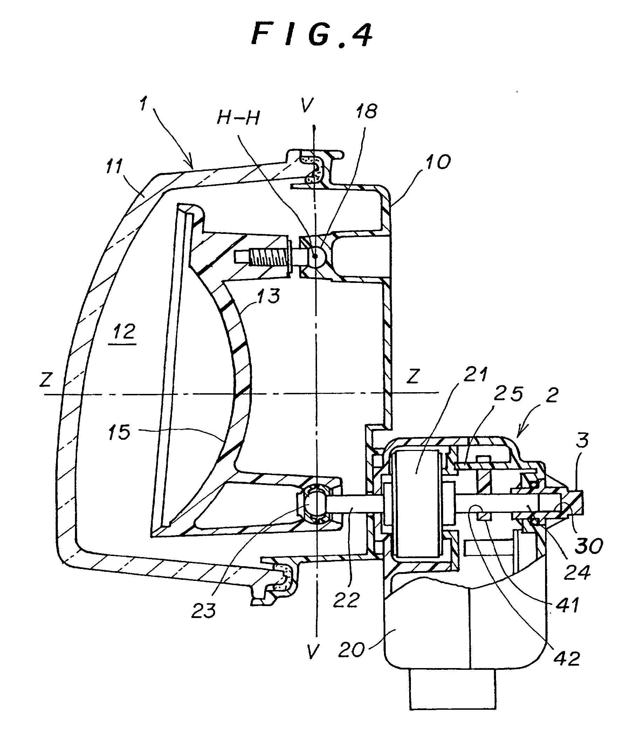

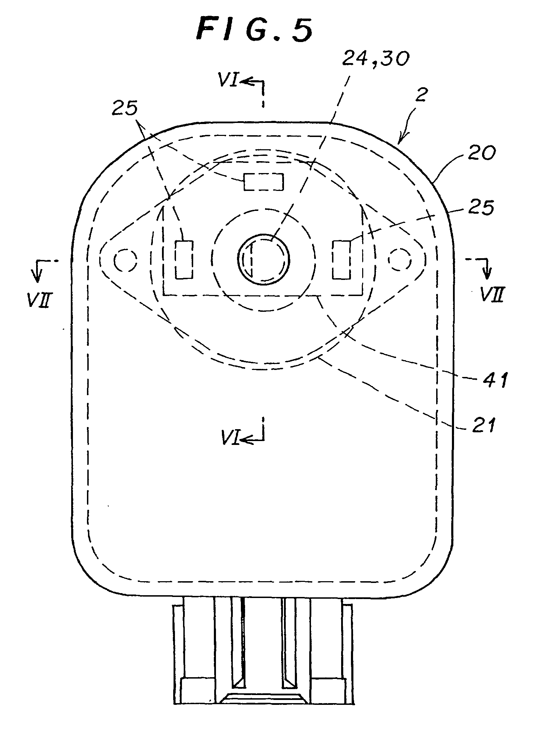

As shown in FIGS. 4 to 7, the drive unit 2 comprises a casing 20 fixed to the lamp housing 10, a stepping motor 21 built in the casing 20, an axially moving shaft 22 joined at one end thereof to the reflector 13, coupled at an intermediate portion thereof to the stepping motor 21 and extended by a D-cut portion 24, an initial-aiming rod 3, a moving block 41, and an abutment 40 formed on each of the opposite inner walls of the casing 20. The stepping motor 21 has an internal thread formed in a rotor (not shown) thereof while the moving shaft 22 has an external thread nearly on the intermediate portion thereof These threads are not illustrated in the drawings. The moving shaft 22 and stepping motor 21 are coupled to each other threadedly, that is, through their engagement between the external and internal threads.

The moving shaft 22 moves along a straight line Z'-Z' generally parallel to an optical axis Z-Z in relation to the casing 20. The moving shaft 22 is joined at one end thereof to the movable reflector 13 by means of the lower pivot mechanism 23. As the stepping motor 21 is driven, the moving shaft 22 does not rotate but moves to automatically adjust the optical axis Z-Z correspondingly to a car body inclination angle.

The initial-aiming rod 3 is installed to the casing 20 rotatably about the axial moving direction Z'-Z' of the moving shaft 22 (will be referred to as "axial direction Z'-Z''' hereinunder) and immovably in the axial direction Z'-Z'. The moving shaft 22 is coupled to the initial-aiming rod 3 with the D-cut shaft portion 24 thereof engaged in a D-cut bore 30 formed in the initial-aiming rod 3. Thus the moving shaft 22 is not rotatable in relation to each other but movable in the axial direction Z'-Z'. As the initial-aiming rod 3 is manually rotated, the moving shaft 22 is rotated while being moved axially to effect an initial aiming.

The moving block 41 is formed like a plate. The moving shaft 22 has fitted the moving block 41 thereon at a boundary portion thereof before the D-cut shaft portion 24. The moving block 41 has an internally threaded hole formed therein and the moving shaft 22 has the external thread formed thereon. Thus, the moving shaft 22 and moving block 41 are threadedly coupled to each other through engagement between the external and internal threads. This threaded connection is indicated with a reference 42. The moving block 41 is further supported on three ribs 25 integrally provided inside the casing 20 and extending in the axial direction Z'-Z'. Thus, the moving block 41 is not rotatable about the axial direction Z'-Z' but movable in the axial direction Z'-Z'. When the initial-aiming rod 3 is manually rotated, the moving block 41 is not moved in the axial direction Z'-Z'. However, as the moving shaft 22 is moved as the stepping motor 21 is driven, the moving block 41 is moved correspondingly in the axial direction Z'-Z'.

The abutment 40 is provided on each of the inner opposite walls of the casing 20. Both sides of the moving block 41 face the abutments 40, respectively. The distance between these two abutments 40 is such that the optical axis is not excessively adjusted (to avoid, for example, that the moving reflector 13 touches the lamp housing 10 or the front lens 11, or the spherical head of the moving shaft 22 is disengaged from the lower pivot mechanism 23).

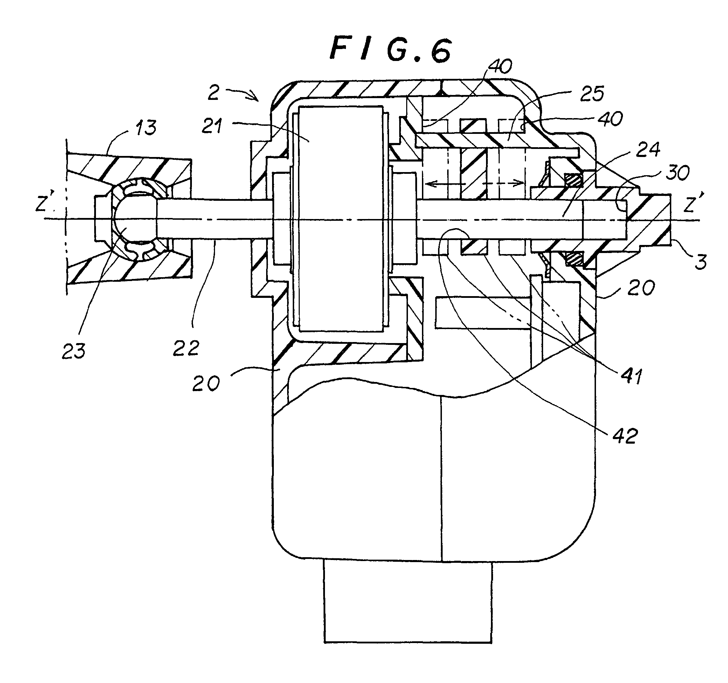

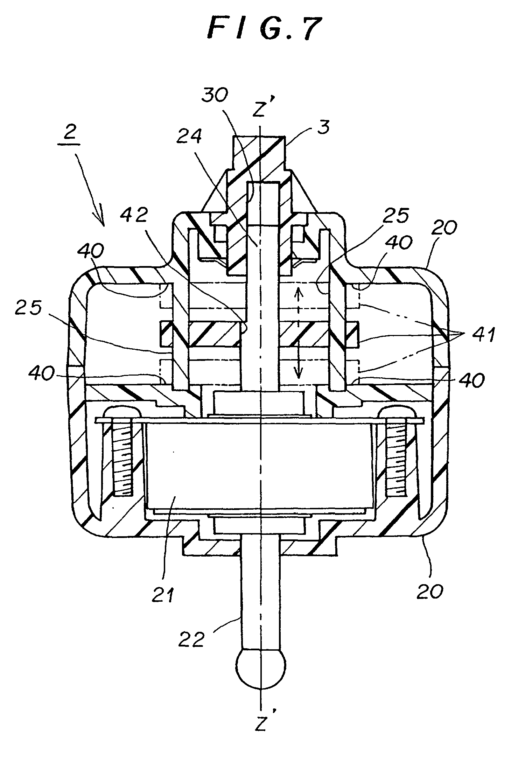

The automatic optical axis adjuster has the aforementioned construction and can determine an initial position of the stepping motor 21 mechanically by the moving block 41 and abutments 40. More particularly, when the stepping motor 21 is reset and put into run, the moving shaft 22 will not rotate but axially move and the moving block 41 will correspondingly move in the direction of solid-line arrow or dashed-line arrow in FIGS. 6 and 7 until it abuts either of the abutments 40 (in positions indicated with chain double-dashed line). In this condition, the stepping motor 21 has the rotor (not shown) thereof idly rotated and next is driven in the opposite direction to move the moving block 41 away from the abutment 40 (for example, to a generally intermediate position between the two abutments 40), whereby the initial position of the stepping motor 21 is determined.

Since the initial position of the stepping motor 21 can be mechanically determined by the moving block 41 and abutments 40, no sensor is required to detect the initial position of the stepping motor, and thus it is not necessary to control the stepping motor electrically through feed-back of an initial position of the stepping motor detected by such a sensor.

The embodiment of the automatic optical axis adjuster according to the present invention is constructed as having been described in the foregoing. It functions as will be described below:

As the initial-aiming rod 3 is manually rotated, the moving shaft 22 rotates along with the rod 3 because of the engagement of the D-cut shaft portion 24 in the D-cut hole 30. The stepping motor 21 has the rotor thereof locked against rotation, and so the moving shaft 22 will move in the axial direction Z'-Z' while being rotated under the screw-feeding action of the threaded connection with the stepping motor 21. As the moving shaft 22 moves in the axial direction Z'-Z', the reflector 13 is tilted vertically about the horizontal axis H-H, thus an initial aiming is effected.

The moving block 41 coupled to the moving shaft 22 owing to the threaded connection 42 is supported on three ribs 25. That is, the moving block 41 is restrained from rotating about the axial direction Z'-Z' when the moving shaft 22 is rotated. Thus, only the moving shaft 22 moves in the axial direction Z'-Z' while being allowed to rotate by the threaded connection 42. The moving block 41 does not follow the axial movement of the moving shaft 22 and thus does not move in the axial direction Z'-Z'. Therefore, the initial aiming can be done without any change of the initial position of the stepping motor 21 mechanically determined as mentioned above. In addition, the initial aiming can be conducted simply by manually rotating the initial-aiming rod 3.

When the stepping motor 21 is driven after completion of the initial aiming, the rotation of the rotor of the stepping motor 21 is transmitted to the moving shaft 22 owing to the threaded connection. Since the initial-aiming rod 3 will not rotate under the action of the torque at this time, the moving shaft 22 will not rotate under the screw-feeding action of the threaded connection with the stepping motor 21 but move in the axial direction Z'-Z'. As the moving shaft 22 moves in the axial direction Z'-Z', the optical axis Z-Z is automatically adjusted correspondingly to a car body inclination angle.

Further, in this embodiment of the automatic optical axis adjuster, the moving block 41 is disposed between the two abutments 40. Therefore, the moving block 41 and abutments 40 will also serve to prevent any excessive adjustment of the optical axis Z-Z.

When the adjusting screw 170 of the manual optical axis adjuster 17 for horizontal adjustment of the optical axis is rotated, the screw mounting 171 of the adjuster 17 moves axially correspondingly to the rotating direction of the adjusting screw 170, so that the reflector 13 can be turned horizontally about the vertical axis V-V. Thus the optical axis of the reflector 13 is manually adjusted horizontally. Note that the manual optical axis adjuster 17 is not always necessary for the present invention.

In the foregoing, the present invention has been described in connection with the automotive headlamp of the movable reflector type. It should be noted however that the automatic optical axis adjuster according to the present invention can be used with an automotive headlamp using a movable lamp unit. In this case, the automatic optical axis adjuster is to be installed on the car body and destined in this case to adjust the optical axis of the lamp unit.

The drive unit 2 of the automatic optical axis adjuster, the manual optical axis adjuster 17 for horizontal adjustment of the optical axis and the pivot mechanism 18 in the aforementioned embodiment are disposed as shown in FIG. 1. Note that the disposition of these elements may be different from that shown in FIG. 1 as the case may be. For example, there may be a case that the drive unit 2 is disposed at upper left, the manual optical axis adjuster 17 is at lower right and the pivot mechanism 18 is at lower left, respectively, of the headlamp. Alternatively, the drive unit 2 is disposed at upper right, the adjuster 17 is at lower left and the pivot mechanism 18 is at lower right. Otherwise, the drive unit 2 is disposed at lower left, the adjuster 17 is at upper right and the pivot mechanism 18 is at upper left.

## Claims

1. An automatic optical axis adjuster for an automotive headlamp (1) having a member (13) which reflects a light from a lamp bulb (14) forward and of which the optical axis is to be adjusted, a supporting member (10) in which the light reflecting member (13) is installed tiltably vertically about the horizontal axis of the supporting member (10), said automatic optical axis adjuster comprising:
a stepping motor (21) housed in a casing (20) fixable to the supporting member (10);
an axially moving shaft (22) coupled threadedly to the stepping motor (21) and joinable to the light reflecting member (13); and
a rod (3) installed to the casing (20) rotatably about a moving direction of the moving shaft (22) but immovably in the axial moving direction and coupled to the moving shaft (22) nonrotatably about the axial moving direction of the moving shaft (22) but movably in the axial moving direction; wherein
the moving shaft (22) being moved axially while being rotated as the rod (3) is manually rotated, for initially adjusting the optical axis of the light reflecting member (13) vertically;
the moving shaft (22) being moved axially while not being rotated as the stepping motor (21) is driven, for automatically adjusting the optical axis of the light reflecting member (13) vertically correspondingly to an angle of longitudinal inclination of the car body
**characterized in that,**
said automatic optical axis adjuster further comprises:
a moving member (41) coupled threadedly to the moving shaft (22) to be movable as the moving shaft (22) is driven by the stepping motor (21) but immovable when the rod (3) is manually rotated, and coupled to the casing (20) nonrotatably about the moving direction of the moving shaft (22) but movably in the moving direction of the moving shaft (22); and
abutments (40) for stopping the moving member (41) in place.

2. The automatic optical axis adjuster as set forth in Claim 1, wherein ;
the moving shaft (22) is movable towards or away from the casing (20);
the rod (3) is installed to the casing (20) rotatably about the moving direction of the moving shaft (22) but immovably in the moving direction of the moving shaft (22); and
the abutments (40) are formed within the casing (20).

## Patentansprüche

1. Vorrichtung zum automatischen Einstellen der optischen Achse eines Fahrzeugscheinwerfers (1) mit einem Element (13), welches Licht von einer Glühlampe (14) nach vorne reflektiert und dessen optische Achse einzustellen ist, einem Trageelement (10), in welchem das Licht reflektierende Element (13) vertikal, neigbar um die horizontale Achse des Trageelements (10) installiert ist, wobei die Vorrichtung zum automatischen Einstellen der optischen Achse umfasst:
einen Schrittmotor (21), der in einem Gehäuse (20) aufgenommen ist, welches an dem Trageelement (10) fixierbar ist;
eine axial bewegbare Welle (22), die über ein Gewinde mit dem Schrittmotor (21) koppelbar und mit dem Licht reflektierenden Element (13) verbindbar ist; und
einen Stab (3), der derart an dem Gehäuse (20) montiert ist, dass er drehbar um eine Bewegungsrichtung der bewegbaren Welle (22), aber unbewegbar in die axiale Bewegungsrichtung ist, und derart mit der bewegbaren Welle (22) gekoppelt ist, dass er nicht um die axiale Bewegungsrichtung der bewegbaren Welle (22) drehbar ist, aber in die axiale Bewegungsrichtung bewegbar ist; wobei
während der Stab (3) zum vertikalen anfänglichen Einstellen der optischen Achse des Licht reflektierenden Elementes (13) manuell gedreht wird, die bewegliche Welle (22) axial bewegt wird, während sie sich dreht;
während der Schrittmotor (21) zum vertikalen automatischen Einstellen der optischen Achse des Licht reflektierenden Elementes (13) entsprechend einem Winkel der länglichen Neigung der Fahrzeugkarosserie angetrieben wird, die bewegliche Welle (22) axial bewegt wird, während sie sich nicht dreht,
**dadurch gekennzeichnet, dass**
die Vorrichtung zum automatischen Einstellen der optischen Achse ferner umfasst:
ein bewegliches Element (41), das mit der beweglichen Welle (22) über ein Gewinde derart gekoppelt ist, dass es bewegbar ist, wenn die bewegliche Welle (22) durch den Schrittmotor (21) angetrieben wird, aber unbewegbar ist, wenn der Stab (3) manuell gedreht wird, und derart mit dem Gehäuse (20) gekoppelt ist, dass es nicht-drehbar um die Bewegungsrichtung der beweglichen Welle (22), aber bewegbar in die Bewegungsrichtung der beweglichen Welle (22) ist; und
Widerlager (40) zum Halten des beweglichen Elementes (41) an der Stelle.

2. Die Vorrichtung zum automatischen Einstellen der optischen Achse nach Anspruch 1, wobei;
die bewegliche Welle (22) hinzu oder weg von dem Gehäuse (20) bewegbar ist;
der Stab (3) derart an dem Gehäuse (20) installiert ist, dass er um die Bewegungsrichtung der beweglichen Welle (22) drehbar, aber unbewegbar in Bewegungsrichtung der beweglichen Welle (22) ist; und
die Widerlager (40) innerhalb des Gehäuses (20) vorgesehen sind.

## Revendications

1. Dispositif d'ajustement automatique d'axe optique pour un phare de véhicule automobile (1) comportant un élément (13) qui réfléchit une lumière émise par une ampoule de lampe (14) vers l'avant et dont l'axe optique doit être ajusté, un élément de support (10) dans lequel l'élément (13) réfléchissant la lumière est installé de manière pivotante verticalement autour de l'axe horizontal de l'élément de support (10), ledit dispositif d'ajustement automatique d'axe optique comprenant:
un moteur pas-à-pas (21) logé dans un carter (20) apte à être fixé à l'élément de support (10);
un axe mobile axialement (22) accouplé de manière vissée avec le moteur pas-à-pas (21) et apte à être relié à l'élément (13) réfléchissant la lumière; et
une tige (3) montée sur le carter (20) de manière rotative autour d'une direction de déplacement de l'axe mobile (22), mais de manière immobile dans la direction de déplacement axiale et reliée à l'axe mobile (22) de manière non rotative autour de la direction de déplacement axiale de l'axe mobile (22), mais de manière mobile dans la direction de déplacement axiale; dans lequel
l'axe mobile (22) est déplacé axialement tout en tournant lorsque la tige (3) est tournée manuellement, pour ajuster initialement verticalement l'axe optique de l'élément (13) réfléchissant la lumière;
l'axe mobile (22) étant déplacé axialement sans tourner lorsque le moteur pas-à-pas (21) est entraîné, pour ajuster automatiquement verticalement l'axe optique de l'élément (13) réfléchissant la lumière de manière correspondante à un angle d'inclinaison longitudinale de la carrosserie du véhicule,
**caractérisé en ce que**
ledit dispositif d'ajustement automatique d'axe optique comprend également:
un élément mobile (41) qui est accouplé de manière vissée avec l'axe mobile (22) pour être mobile lorsque l'axe mobile (22) est entraîné par le moteur pas-à-pas (21), mais immobile lorsque la tige (3) est tournée manuellement, et qui est accouplé avec le carter (20) de manière non rotative autour de la direction de déplacement de l'axe mobile (22), mais de manière mobile dans la direction de déplacement de l'axe mobile (22); et
des butées (40) pour immobiliser l'élément mobile (41) en place.

2. Dispositif d'ajustement automatique d'axe optique tel que défini dans la revendication 1, dans lequel:
l'axe mobile (22) est mobile en direction ou à distance du carter (20);
la tige (3) est montée sur le carter (20) de manière rotative autour de la direction de déplacement de l'axe mobile (22), mais de manière immobile dans la direction de déplacement de l'axe mobile (22); et
les butées (40) sont formées à l'intérieur du carter (20).
